# EUROPEAN PATENT APPLICATION

(11) **EP 4 579 614 A1**
(43) Date of publication of application: **02.07.2025**
(21) Application number: 24223555.4
(22) Date of filing: 27.12.2024
(51) Int. Cl.: G06V 20/10, G06T 7/11

(54) **BURNT AREA DETECTION BASED ON INFRARED IMAGE DATA**

(30) Priority: 29.12.2023 LU 505972
(71) Applicant: OroraTech GmbH, 81669 München (DE)
(72) Inventor: RASHKOVETSKY, Dmitry, 81669 Munich (DE); BERECZKY, Max, 81669 Munich (DE); WALDENMAIER, Alexander, 81669 Munich (DE)
(74) Representative: MERH-IP Matias Erny Reichl Hoffmann Patentanwälte PartG mbB

(57) **Abstract**

This application relates to a method of burnt area detection. The method includes: obtaining first infrared (IR) image data based on one or more first IR images of the earth surface, determining, as a hotspot area, an area on the earth surface with high thermal emission in the one or more first IR images, based on the first IR image data, obtaining second IR image data based on one or more second IR images of an area of the earth surface that at least partially overlaps with the hotspot area, wherein the one or more second IR images have been taken after the one or more first IR images, obtaining third IR image data based on one or more third IR images of an area of the earth surface that at least partially overlaps with the hotspot area, wherein the one or more third IR images have been taken before the one or more first IR images, and determining a measure of a burnt area relating to the hotspot area based on the second IR image data and the third IR image data. The application further relates to corresponding apparatus, programs, and computer-readable storage media.

## Description

### Technical Field

This disclosure generally relates to burnt area detection (e.g., satellite-based burnt area detection). In particular, the disclosure relates to burnt area detection using infrared (IR) image material.

### Background

Accurate delineation of areas on earth's surface that were burnt by vegetation fires (burnt areas or burn scars) is crucial for fire risk assessment, post-fire damage assessment, large scale fire trend analysis, estimation of greenhouse gas emissions, and natural resource management. The process of mapping or identifying burnt areas typically involves analyzing airborne or spaceborne imagery to detect "scars" of burnt vegetation caused by the fire. This process is typically performed automatically in coarse spatial resolution on a global scale, semi-automatically in finer resolution on local or regional scales, and/or manually on a small, site-specific scale.

In addition to mapping (i.e., identifying) the burnt area, estimating the severity with which the burnt area was affected is another important task. Burn severity can be used to estimate the damage caused by the fire and the time required until vegetation is recovered.

Today, it is widely considered that semi-automatic high resolution (e.g., ~10m detail) mapping of burnt areas is economically infeasible on a global scale as it requires high costs for manual interpretation and correction of the automatically detected burnt areas. Therefore, current approaches are either limited to a specific geographic region or, if available at a global level, suffer from low spatial resolution and low update frequency.

Thus, there is a need for improved techniques for burnt area detection using satellite-based or aerial image data. There is particular need for such techniques that provide for increased spatial resolution and/or reduced update time. There is further need for cost-effective techniques for satellite-based burnt area detection.

### Summary

In view of some or all of these needs, the present disclosure proposes a method of burnt area detection, as well as corresponding apparatus, computer programs, and computer-readable storage media, having the features of the respective independent claims.

An aspect of the disclosure relates to a method of burnt area detection. The method may be satellite-based, i.e., may use satellite-based imagery. The method may include obtaining first infrared (IR) image data based on one or more first IR images of the earth surface. The first images may have high temporal but low spatial resolution. The method may further include determining, as a hotspot area, an area on the earth surface with high thermal emission in the one or more first IR images, based on the first IR image data. The method may further include obtaining second IR image data based on one or more second IR images of an area of the earth surface that at least partially overlaps with the hotspot area. Therein, the one or more second IR images may have been taken after the one or more first IR images. For example, the second images may be obtained from ESA's Sentinel constellation (e.g., Sentinel 2A, 2B) or NASA's Landsat constellation (e.g., Landsat 8, Landsat 9). The method may further include obtaining third IR image data based on one or more third IR images of an area of the earth surface that at least partially overlaps with the hotspot area. Therein, the one or more third IR images may have been taken before the one or more first IR images. The method may yet further include determining a measure of a burnt area relating to the hotspot area based on the second IR image data and the third IR image data. This processing may be performed whenever a second IR image is obtained, provided that it includes a hotspot area.

By performing hotspot detection and detection of burnt areas independently of each other, using different IR image sources, the proposed method can achieve high temporal resolution (e.g., at the order of few days) and high spatial resolution (e.g., at the order of 10m) at the same time. Moreover, both parts of the processing can be fully automated and do not require human intervention, in particular as the detection of burnt areas can be limited to areas that are confirmed to include hotspot areas and thus can be assumed to have been affected by a fire.

In some embodiments, the one or more first IR images may be mid-wave IR images. Additionally or alternatively, the one or more second IR images and the one or more third images may be short-wave IR images.

In some embodiments, determining the measure of the burnt area relating to the hotspot area may include determining a measure indicative of a degree of vegetation burn for each pixel of a post-burn IR image that is based on the one or more second IR images and for each pixel of a pre-burn IR image that is based on the one or more third IR images. The measure of the degree of vegetation burn may be a dimensionless measure. This measure may correspond to or derive from the so-called normalized burn ratio, for example. The pre-burn IR image that is based on the one or more third IR images may relate to a mosaic (or overlay) of the one or more third IR images.

In some embodiments, determining the measure of the burnt area relating to the hotspot area may include determining a difference image based on the pre-burn IR image and the post-burn IR image, wherein each pixel of the difference image has an assigned value that is based on a difference between the measure indicative of the degree of vegetation burn for a corresponding pixel of the pre-burn IR image and the measure indicative of the degree of vegetation burn for a corresponding pixel of the post-burn IR image.

In some embodiments, determining the measure of the burnt area relating to the hotspot area may include determining a burnt area in the area covered by the post-burn IR image based on the difference image.

In some embodiments, determining the burnt area in the area covered by the post-burn IR image may include applying a morphological snakes algorithm.

In some embodiments, a starting point for the morphological snakes algorithm may be chosen inside the hotspot area.

In some embodiments, the method may further include rejecting false positives among detected burnt areas based on one or more of: an overlap with previously detected burnt areas; a comparison of pixel values in the difference image to a threshold; and/or a landcover class of the burnt area.

In some embodiments, the method may further include determining a measure of confidence for a detected burnt area based on one or more of: a spectral separability for the detected burnt area determined based on the pre-burn IR image and the post-burn IR image; a number of hotspot areas other than the hotspot area to which the measure of the burnt area relates within the detected burnt area; and/or a spatial relationship of the detected burnt area to the hotspot area to which the measure of the burnt area relates.

In some embodiments, the method may further include determining a plurality of areas on earth surface with high thermal emission in the one or more first IR images. The method may yet further include applying a clustering algorithm to the plurality of areas with high thermal emission to determine the hotspot area. The hotspot area thus may correspond to a cluster of areas with high thermal emission.

In some embodiments, the method may further include determining an area of interest (AOI) that includes and extends beyond the hotspot area by a predefined measure. Therein, the area covered by the one or more second IR images and the area covered by the one or more third IR images may each include the area of interest. The area covered by the one or more third IR images may correspond to a mosaic of the one or more third IR images, for example. Further, the morphological snakes algorithm may be applied to the area of interest.

In some embodiments, the method may further include extending a boundary of the area of interest if at least part of the boundary of the area of interest is included in the burnt area. For example, the boundary may be extended if more than a predetermined ratio of pixels on the boundary are included in the burnt area.

In some embodiments, the method may further include continuously obtaining the first image data for continuously determining hotspot areas on the earth surface. The first IR images may be obtained in real time or near-real time, for example.

In some embodiments, the method may further include storing the one or more second IR images as third IR images after determining the measure of a burnt area relating to the hotspot area in the one or more first IR images. Thereby, a database of pre-burn imagery can be continuously built up, extended, and kept up to date.

In some embodiments, the method may further include maintaining a database for storing the third IR images.

Another aspect of the disclosure relates to an apparatus comprising a processor and a memory that is coupled to the processor and stores instructions for execution by the processor. The processor may be adapted to perform any of the methods described herein.

Another aspect of the disclosure relates to a program including instructions that, when the program is carried out by a computing device, cause the computing device to perform any of the methods described herein.

Another aspect of the disclosure relates to a computer-readable storage medium storing the aforementioned program.

It should be noted that the methods and devices including the preferred embodiments as outlined in the present patent application may be used stand-alone or in combination with the other methods and devices disclosed in this document. Furthermore, all aspects of the methods and devices outlined in the present patent disclosure may be arbitrarily combined. In particular, the features of the claims may be combined with one another in an arbitrary manner.

It will be appreciated that device features and method steps may be interchanged in many ways. In particular, the details of the disclosed method of burnt area detection can be realized by the corresponding device, and vice versa, as the skilled person will appreciate. Moreover, any of the above statements made with respect to the method (and, e.g., method steps) are understood to likewise apply to the corresponding device (and, e.g., its processors, blocks, units, or stages), and vice versa.

### Brief Description of the Figures

Example embodiments of the disclosure are explained below with reference to the accompanying drawings, wherein
**Fig. 1** shows an example of a wildfire as seen in actual satellite imagery and a false color composite including a burnt area;
**Fig. 2** is a flowchart illustrating an example of a method of burnt area detection according to embodiments of the disclosure;
**Fig. 3** to **Fig. 5** are flowcharts illustrating details and optional features of the method of **Fig. 2** according to embodiments of the disclosure; and
**Fig. 6** schematically illustrates an apparatus for implementing methods according to embodiments of the disclosure.

### Detailed Description

In the following, example embodiments of the disclosure will be described with reference to the appended figures. Identical elements in the figures may be indicated by identical reference numbers, and repeated description thereof may be omitted.

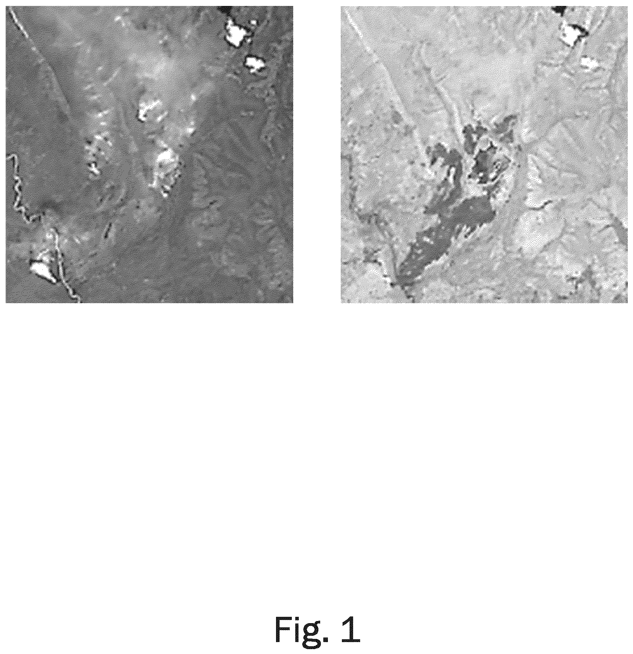

An example of a recent wildfire in the province of Alberta, Canada is shown in **Fig. 1****.** Here, the left panel shows the fire as it appears in a Sentinel-2 satellite image. The aim is to identify the area in which vegetation is burnt by the wildfire.

Broadly speaking, the present disclosure proposes a system for automatic detection of burn scar outlines of vegetation fires (e.g., wildfires, bushfires) on a global scale, using satellite (or in some implementations, aerial) imagery. The outlines (e.g., polygons) may be produced whenever new satellite imagery becomes available for locations where fires have occurred, which is typically no later than two to three days. The processed burn outlines, "burnt areas", may be available within about four hours to one day after acquisition of the satellite imagery, at a spatial resolution of up to 10m.

Methods according to the present disclosure may further allow deriving one or more of the following information, to further improve usability of the detection results:
- Burn severity - allows to differentiate between different burnt areas
- Detection confidence - allows to estimate the level of certainty with which the algorithm has detected the burnt area
- Timestamps, such as "started after" and/or "ended before" in relation to the fire - allow narrowing down the uncertainty about the time when the area was burning

Techniques (e.g., methods, systems) according to the present disclosure may involve (e.g., comprise, consist of) two independent stages, viz., Stage I, Active Fire Cluster Detection and Stage II, Burnt Area Detection. Stages I and II may be performed independently of each other.

### Stage I, Active Fire Cluster Detection

Stage I may include one or more of processing steps (A) through (C) described below.
**(A)** Continuously acquire near-real time (e.g., ca. 5 to 120 minutes old) IR imagery from a suitable satellite or satellite constellation (or aerial image source). For example the IR imagery may be obtained from around 20 satellites, including satellites from one or more of NASA, USGS, ESA, and others.
**(B)** Find hotspots, i.e., pixels which show unusually great thermal emission (e.g., above a predefined threshold), suggesting the presence of a vegetation fire.
**(C)** Cluster the hotspots, i.e., associate them in spatiotemporal manner, and optionally assign a cluster confidence level based on, for example, a number of detections. This may yield an indication (e.g., location, boundary, etc.) of a hotspot area. A hotspot area is an area that is likely to include a fire and that is therefore a candidate for estimating vegetation burns by comparing a state before occurrence of the fire to a state after occurrence of the fire.

As noted above, Stage I may proceed independently of Stage II.

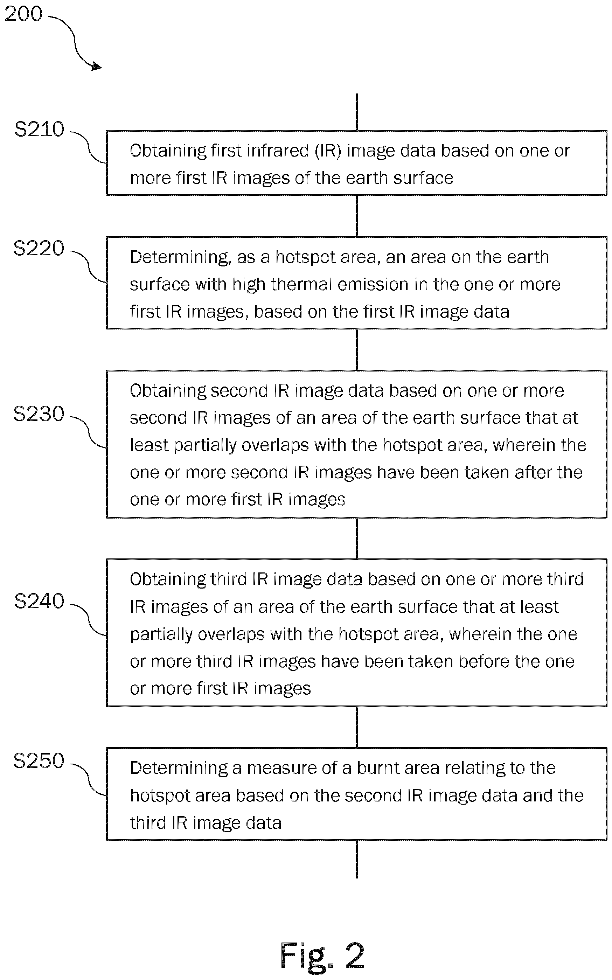

**Fig. 2** shows an example of a method 200 of burnt area detection that involves (at least part of) Stage I. Method 200 includes steps S210 through S250, of which steps S210 and S220 relate to Stage I.

At step S210, first IR image data is obtained based on one or more first IR images of the earth surface. These first IR images may have high temporal but low spatial resolution. In this regard, without intended limitation, high temporal resolution may relate to a revisit rate of 10 to 20 times per day, for example, while low spatial resolution may relate to a resolution of roughly 375 to 1250 meters, for example. Moreover, the first IR images may be mid-wave IR (MWIR) images (e.g., with wavelength ranging from 3µm to 5µm). This step may correspond or relate to step (A) of Stage I.

At step S220, an area on the earth surface with high thermal emission in the one or more first IR images is determined as a hotspot area, based on the first IR image data.

In some implementations, the first image data may be continuously obtained for continuously determining hotspot areas on the earth surface. The first IR images may be obtained in real time or near-real time, for example. Continuously determining hotspot areas may result in a (continuously updated) collection of hotspot areas.

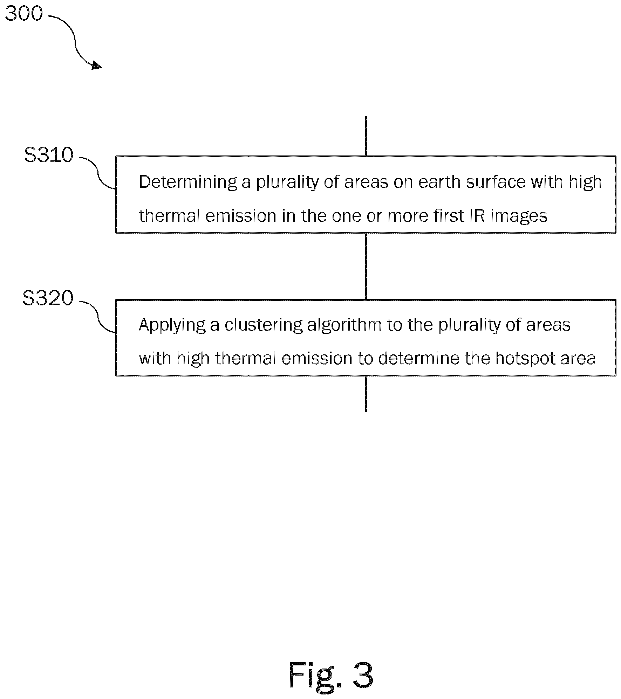

An example implementation 300 of step S220 is illustrated in the flowchart of **Fig. 3**. Example implementation 300 includes steps S310 and S320.

At step S310, a plurality of areas on earth surface with high thermal emission in the one or more first IR images is determined. This step may correspond or relate to step (B) of Stage I.

At step S320, a clustering algorithm is applied to the plurality of areas with high thermal emission to determine the hotspot area. This step may correspond or relate to step (C) of Stage I.

Further at step S320, a confidence level (e.g., cluster confidence level) indicative of a confidence that the hotspot area obtained by the clustering indeed relates to a fire may be determined. This may be done for example based on the number of areas on earth surface with high thermal emission in the one or more first IR images identified at step S310, a number of (independent) satellites that have detected the cluster, the observed fire radiative power (e.g., in units of MW), and/or a frequency with which the cluster was detected by geostationary satellites. The higher the number, the higher the confidence that the hotspot area indeed relates to a fire.

With the processing of method 300, the hotspot area determined at step S220 may in some implementations correspond to a cluster of areas with high thermal emission.

### Stage II. Burnt Area Detection

Next, an example of Stage II will be described. Stage II may include one or more of processing steps (A) through (L) described below.
**(A)** Continuously acquire satellite data (satellite image data, e.g., Sentinel-2A/B and Landsat-8/9 satellite data) globally and store them internally. Storage may be in an internal COG ("Cloud Optimized GeoTIFF") archive. A newly acquired image in the context of this step will be referred to as post-scene.
   Notably, the satellite imagery at Stage II may be of low temporal resolution but high spatial resolution, unlike the satellite imagery at Stage I. Of course, improved performance of the proposed method could be achieved for satellite imagery of high temporal resolution at Stage II; still, it is an important property of the proposed method that it is applicable regardless of temporal resolution of the satellite imagery at Stage II.
**(B)** For each newly acquired image (i.e., post-scene) from step (A), create a pre-mosaic (e.g., cloud free pre-mosaic). This pre-mosaic is a composite of previously acquired images, for example in previous iterations of (A), which show the most recent previous view of the earth's surface at the location where the new image was acquired. The pre-mosaic may be created to be free of cloud coverage. Moreover, a threshold on the age of previously acquired images that enter the pre-mosaic may be applied. For example, the threshold may be 30 days in some implementations.

Here, it is understood that the processing of step (B) and subsequent steps as described below may be triggered when an area covered by or overlapping with the post-scene is found, for example by processing in accordance with Stage I, to include one or more of a hotspot, cluster of hotspots, and/or hotspot area.

In other words, Stage I may be continuously performed independently of Stage II. Continuous performance of Stage I may produce a (continuously updated) collection or set of hotspots, clusters of hotspots, and/or hotspot areas. A newly acquired image (post-scene) in step (A) of Stage II may trigger a check as to whether the area covered by this image contains a hotspot from the collection obtained by Stage I. If so, the processing of step (B) of Stage II may be performed, followed by the subsequent steps of Stage II. In this regard, it is understood that any hotspots processed by Stage II may be removed from the collection or may be flagged as such, in some implementations.

The trigger for performing step (B) and subsequent steps may thus be as follows: A new post-scene is acquired and there exist one or more (high confidence) active fire clusters (as detected in Stage I) in the timeframe between the post-scene and the pre-mosaic within the spatial bounds of the post-scene. Evidently, the pre-mosaic can contain imagery from one or more different points in time. This means that the lower time bound of the active fire cluster search may vary depending on the location within the post-scene.
(C) Compute a Normalized Burn Ratio (NBR) image both for the pre-mosaic and the post-scene. Here, the NBR serves as an example for a dimensionless measure for the degree of vegetation burn, without intended limitation. Additionally or alternatively, a Normalized Difference Vegetation Index (NDVI) may be computed for the purpose at hand.
**(D)** Compute a differential NBR (dNBR) image, which is the difference in NBR between the pre-mosaic and the post-scene. Here, the dNBR serves as an example for a difference image between the pre-mosaic and the post-scene and the post-scene based on the aforementioned dimensionless measure. Also here, the NDVI may be used instead of the NBR, in which case a differential NDVI image may be computed.
**(E)** Extract fire clusters (e.g., hotspot areas) for the post-scene area that were detected during step (C) of Stage I. Establish an area of interest (AOI) around each of these fire clusters, optionally discarding those fire clusters that do not have a sufficient cluster confidence.
**(F)** Within each AOI, run the so-called morphological-snakes algorithm (for example as described in https://ieeexplore.ieee.org/document/6529072: "A Morphological Approach to Curvature-Based Evolution of Curves and Surfaces") on the dNBR (or dNDVI) image. This algorithm segments the image into two regions: "burnt" (BA) and "not burnt." Therein, the algorithm seeks to find one or more separation lines between pixels that are as different as possible with regard to a certain characteristic, such as the dNBR in the case at hand. Typically, segments in the dNBR image with high dNBR values may be considered as potential burnt areas.
**(H)** Vectorization of the detected segments into vector features (Polygons). This may produce an indication of a detected burnt area in a universally accessible or exchangeable format.
**(I)** Of all areas detected as "burnt" in previous step (F), optionally reject any false positives such as:
   - Areas that overlap previously detected burnt areas. Because burn scars can be persistent in time and still be detected long after the fire has run out, this step may avoid detecting the same area as burnt more than once.
   - Areas showing an invalid or not high enough dNBR value (or NDVI value)
   - Areas having invalid landcover class (e.g., water or built-up)
**(J)** Calculate a confidence metric for the (remaining, i.e., non-rejected) BA based on one or more of:
   - Spectral separability of the detected burnt area from its environment
   - Number of hotspots that were detected within the perimeter of the burnt area
   - Spatial relationship between the cluster that was used to define the AOI in step (E) of Stage II and the detected burnt area
**(K)** Optionally insert the results into the database.
**(L)** Optionally provide analysis statistics and all necessary auxiliary data, for example in a web-based geospatial information platform, along with the active fire detections from Stage I.

As noted above, Stage II may be performed independently from Stage I in some implementations.

Returning to the example of **Fig. 2****,** method 200 of burnt area detection involves (at least part of) Stage II. In particular, steps S230 through S250 of method 200 relate to Stage II.

In some implementations, step S210 and S220 may be continuously performed to obtain or maintain a (continuously updated) collection or list of hotspot areas. Then, when an IR image (e.g., higher resolution IR image, including second IR images as described below) is obtained, it may be checked for whether its area contains or at least overlaps with a hotspot area from the list. If so, steps S230 through S250 may be performed for this IR image.

At step S230, second IR image data is obtained based on one or more second IR images of an area of the earth surface that at least partially overlaps with the hotspot area. These one or more second IR images have been taken after the one or more first IR images. As such, the second images obtained at this step may correspond or relate to the post-scene at step (A) of Stage II. The processing described herein and in the following may be performed whenever a second IR image is obtained, provided that it includes a hotspot area as identified by step S220.

In one example, the second images may be obtained from ESA's Sentinel satellites (e.g., Sentinel 2A, 2B) or NASA's Landsat satellites (e.g., Landsat 8, Landsat 9). When using the NBR as the dimensionless measure for the degree of vegetation burn, the one or more second IR images may be images including short-wave IR and near IR. In alternative implementations, when using the NDVI as the dimensionless measure for the degree of vegetation burn, the one or more second IR images and the one or more third IR images may be images including the near IR and the Red channel. In any case, the one or more second IR images and the one or more third IR images may be images including at least near IR.

At step S240, third IR image data is obtained based on one or more third IR images of an area of the earth surface that at least partially overlaps with the hotspot area. The one or more third IR images have been taken before the one or more first IR images. As such, the third images obtained at this step may correspond or relate to the pre-mosaic (or cloud free pre-mosaic) at step (B) of Stage II.

The third IR images may be pre-stored (e.g., earlier) IR images obtained from ESA's Sentinel satellites (e.g., Sentinel 2A, 2B) or NASA's Landsat satellites (e.g., Landsat 8, Landsat 9). In any case, the one or more third IR images may include short-wave IR and near IR.

For example, method 200 may foresee to store the one or more second IR images as third IR images after determining the measure of a burnt area at step S250 described below. This may imply maintaining a database for storing the second IR images as third IR images for later use.

At step S250, a measure of a burnt area relating to the hotspot area is determined based on the second IR image data and the third IR image data.

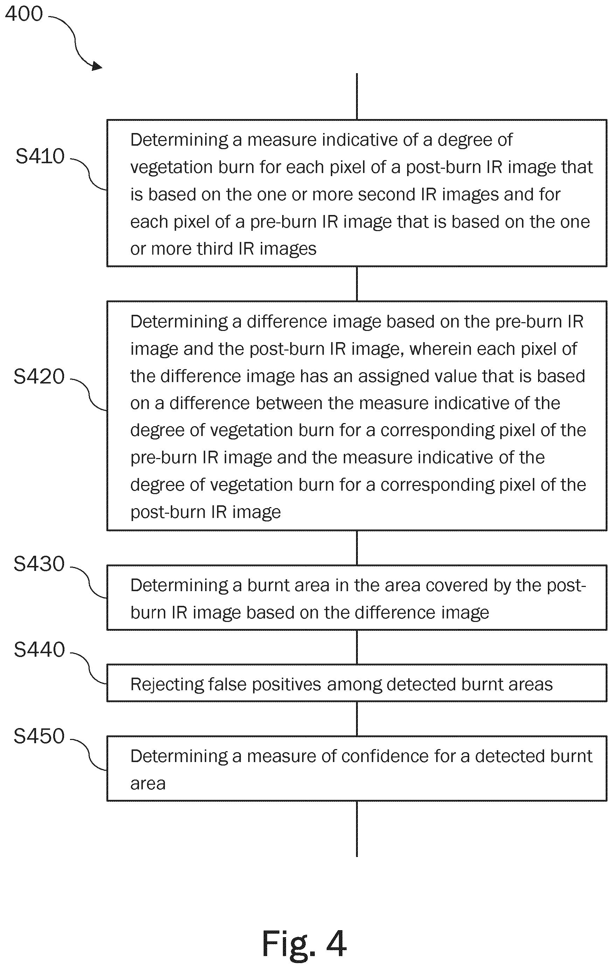

An example implementation 400 of step S250 is illustrated in the flowchart of **Fig. 4****.** Example implementation 400 includes steps S410 through S450. At least steps S440 and S450 may be optional in some implementations.

At step S410, a measure indicative of a degree of vegetation burn is determined for each pixel of a post-burn IR image and for each pixel of a pre-burn IR image. Therein, the post-burn IR image is based on the one or more second IR images. The pre-burn IR image is based on the one or more third IR images. For example, the pre-burn IR image may relate to a mosaic (or overlay) of the one or more third IR images. As such, the post-burn IR image may correspond to the post-scene at step (A) of Stage II and the pre-burn IR image may correspond to the pre-mosaic at step (B) of Stage II. Step S410 may correspond or relate to step (C) of Stage II described above.

As noted above, the measure of the degree of vegetation burn may be a dimensionless measure. It may correspond to or derive from the aforementioned NBR, for example.

At step S420, a difference image is determined based on the pre-burn IR image and the post-burn IR image. Each pixel of the difference image has an assigned value that is based on a difference between the measure indicative of the degree of vegetation burn (e.g., NBR) for a corresponding pixel of the pre-burn IR image and the measure indicative of the degree of vegetation burn (e.g., NBR) for a corresponding pixel of the post-burn IR image. In other words, each pixel of the difference image may have a value corresponding to a difference between the aforementioned measures for corresponding pixels of the pre-burn and post-burn IR images. As such, the difference image may correspond or relate to the aforementioned dNBR image. Step S420 may correspond or relate to step (D) of Stage II described above.

At step S430, a burnt area in the area covered by the post-burn IR image is determined based on the difference image. This may involve, for example, applying a morphological snakes algorithm to the difference image. A starting point for the morphological snakes algorithm may be chosen inside the hotspot area. This step may correspond or relate to step (E) of Stage II as described above.

In one example, the morphological snakes algorithm may start out from a checkerboard. It may initialize the segmentation map with a chess board-like structure where the two colors black and white (or any other binary indication) correspond to the numbers 1 and zero (or vice versa). Another option is to create an initialization based on the cluster area, where pixels that intersect the cluster area get the values 1 and pixels that do not intersect the cluster area get the value 0 (or vice versa). The assumption here would be that the cluster area is already to some degree a reasonable estimate of the later burnt area. The morphological snakes algorithm may then refine this initial segmentation map.

At step S440, which is an optional step, false positives among detected burnt areas are rejected. This rejection of false positives may be based on one or more of:
- an overlap with previously detected burnt areas
- a comparison of pixel values in the difference image to a threshold
- a landcover class of the burnt area

Step S440 may correspond or relate to step (I) of Stage II as described above.

At step S450, which is an optional step, a measure of confidence (e.g., confidence metric) for a detected burnt area is determined. This determination may be based on one or more of:
- a spectral separability for the detected burnt area determined based on the pre-burn IR image and the post-burn IR image
- a number of hotspot areas other than the hotspot area to which the measure of the burnt area relates within the detected burnt area
- a spatial relationship of the detected burnt area to the hotspot area to which the measure of the burnt area relates

Step S450 may correspond or relate to step (J) of Stage II as described above.

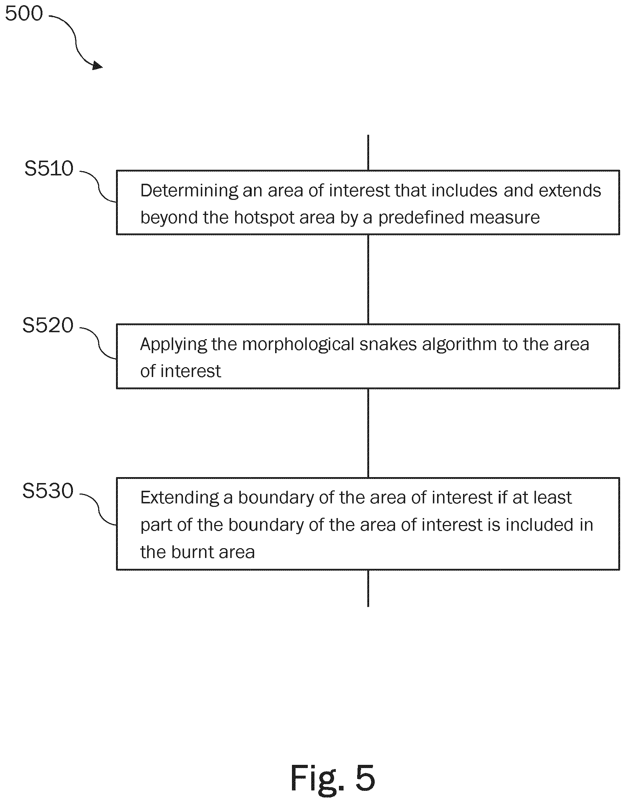

Method 500 including additional optional steps that relate to or that may be performed in the context of method 200 is described in the flowchart of **Fig. 5****.** For example, method 500 may be seen as an implementation example of step S430 in method 400. Method 500 includes steps S510 through S530.

At step S510, an area of interest is determined that includes and extends beyond the hotspot area by a predefined measure. Therein, it is understood that the area covered by the one or more second IR images (e.g., post-scene) and the area covered by the one or more third IR images (e.g., pre-mosaic) each include the area of interest. The area covered by the one or more third IR images may correspond to a mosaic of the one or more third IR images, for example.

Step S510 may correspond or relate to step (E) of Stage II as described above.

At step S520, the morphological snakes algorithm is applied to the area of interest. As such, this step may correspond or relate to step (F) of Stage II described above.

At step S530, a boundary of the area of interest is extended (or expanded) if at least part of the boundary of the area of interest is included in the burnt area. For example, the boundary may be extended if more than a predetermined ratio (e.g., percentage) of pixels on the boundary are included in the burnt area. As such, this step may correspond or relate to step (G) of Stage II described above.

### Technical Advantages

Techniques according to the present disclosure have been applied to IR image material of geographic regions including Chile, Australia, and Canada in an automated manner for an extended period of time. Detection results have been validated against conventional detection techniques.

As an example, the right panel of **Fig. 1** shows a burnt area (highlighted) in the province of Alberta, Canada, as detected by techniques according to the present disclosure, starting from detection of a wildfire in the left panel of **Fig. 1****.** The detection result conforms to detection by conventional techniques.

By relying on first to third IR images taken at different times and potentially stemming from different sources (and having different temporal and/or spatial resolutions) and by applying processing as outlined above, techniques accordingto embodiments of the disclosure can detect burnt areas with both high spatial resolution and high temporal resolution in a fully automated manner, without human intervention. One key ingredient to these techniques is, apart from using different image sources, performing hotspot detection and burnt area detection (e.g., via Stages I and II) independently of each other.

As a result, techniques according to embodiments of the disclosure can provide information on burnt areas within at most a few days, in ideal cases within hours, with a global spatial resolution of about 10m, in a fully automated manner.

A comparison of performance between techniques according to embodiments of the disclosure and examples of conventional techniques will be provided next.

### European Forest Fire Information System (EFFIS)

EFFIS provides for rapid damage assessment based on MODIS (twice daily, 375 m), VIIRS (daily, 250 m), and Sentinel-2 (2 to 3 days) data. Data is provided on a global scale for MODIS and VIIRS based data and for continental Europe for Sentinel-2 data. For this, semi-automatic approaches (MODIS and Sentinel-2) and automatic approaches (VIIRS) are used. High-resolution data acquired by Sentinel-2A and Sentinel-2B is processed only for continental Europe.

Compared to this, the proposed system can work in a completely automated manner on a global scale without human intervention even for high resolution Sentinel-2 and Landsat-8/9 data. Moreover, the proposed system can provide statistics on burnt areas based on a fully automated process, whereas EFFIS can only provide statistics for burnt areas derived from semi-automatic approaches (for automatic approaches, EFFIS can provide only a start date, a date of a last update, and a surface measure (in hectares) for burnt areas). Image data from different sources (e.g., Sentinel-2A, Sentinel-2B, Landsat-8 and Landsat-9) is fused on a global scale to increase the temporal resolution.

### Global Wildfire Information System (GWIS)

GWIS provides the MODIS burnt areas (MCD64A1) with a monthly resolution. No high-resolution sensor data (Sentinel-2A/B, Landsat-8/9) is processed.

### MODIS Burnt Area product (MCD64A1)

MCD64A1 operates on a global scale, but at a spatial resolution limited to 500m.

### ZKI Fire Monitoring System

The ZKI Fire Monitoring System provides data only for Europe. The used satellite data sources (OLCI and MODIS) have an order of magnitude lower resolution than the proposed solution: 300 m (OLCI) and 500 m (MODIS).

### Landsat Burnt Area Product

The Landsat Burnt Area Product is limited to the United States and conterminous countries, i.e., does not provide a global solution. Results are published once every 14 days.

### Manual mapping of the perimeter post fire

Manual mapping is a very time consuming process requiring an expert in the field. Therein, human operators map burnt areas based on visual identification using satellite imagery (without any automation whatsoever). This process cannot be scaled to the global scale due to an extensive requirement in human (expert) resources.

### Apparatus, Programs, and Recording Media

While methods have been described above, it is understood that the present disclosure likewise relates to apparatus (e.g., computer apparatus or apparatus having processing capability in general) for implementing these methods (or techniques in general).

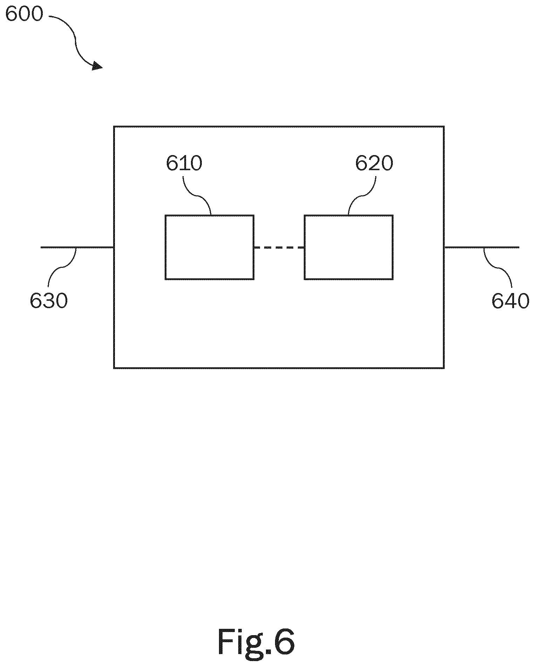

An example of such apparatus 600 is schematically illustrated in Fig. 6. The apparatus 600 comprises a processor 610 and a memory 620 coupled to the processor 610. The memory 620 may store instructions for execution by the processor 610. The processor 610 may be adapted to implement apparatus described throughout the disclosure and/or to perform methods (e.g., methods of burnt area detection) described throughout the disclosure. The apparatus 600 may receive inputs (e.g., first to third IR images, first to third image data) and generate outputs (e.g., indications of burnt areas, vectorized polygon maps, severity of burn, detection confidences, statistics, etc.) as described throughout the disclosure.

The present disclosure further relates to programs (e.g., computer programs) comprising instructions that, when executed by a processor, cause the processor to carry out any of the methods described throughout the disclosure, and to computer-readable storage media storing such programs.

### Interpretation

It should be noted that the description and drawings merely illustrate the principles of the proposed method. Those skilled in the art will be able to implement various arrangements that, although not explicitly described or shown herein, embody the principles of the invention and are included within its spirit and scope. Furthermore, all examples and embodiments outlined in the present disclosure are principally intended expressly to be only for explanatory purposes to help the reader in understanding the principles of the proposed method and device. Furthermore, all statements herein providing principles, aspects, and embodiments of the invention, as well as specific examples thereof, are intended to encompass equivalents thereof.

## Claims

1. A method of burnt area detection, comprising:
obtaining first infrared, IR, image data based on one or more first IR images of the earth surface;
determining, as a hotspot area, an area on the earth surface with high thermal emission in the one or more first IR images, based on the first IR image data;
obtaining second IR image data based on one or more second IR images of an area of the earth surface that at least partially overlaps with the hotspot area, wherein the one or more second IR images have been taken after the one or more first IR images;
obtaining third IR image data based on one or more third IR images of an area of the earth surface that at least partially overlaps with the hotspot area, wherein the one or more third IR images have been taken before the one or more first IR images; and
determining a measure of a burnt area relating to the hotspot area based on the second IR image data and the third IR image data.

2. The method according to claim 1, wherein the one or more first IR images are mid-wave IR images; and
wherein the one or more second IR images and the one or more third images are short-wave IR images.

3. The method according to claim 1 or 2, wherein determining the measure of the burnt area relating to the hotspot area comprises:
determining a measure indicative of a degree of vegetation burn for each pixel of a post-burn IR image that is based on the one or more second IR images and for each pixel of a pre-burn IR image that is based on the one or more third IR images.

4. The method according to claim 3, wherein determining the measure of the burnt area relating to the hotspot area comprises:
determining a difference image based on the pre-burn IR image and the post-burn IR image, wherein each pixel of the difference image has an assigned value that is based on a difference between the measure indicative of the degree of vegetation burn for a corresponding pixel of the pre-burn IR image and the measure indicative of the degree of vegetation burn for a corresponding pixel of the post-burn IR image.

5. The method according to claim 4, wherein determining the measure of the burnt area relating to the hotspot area comprises:
determining a burnt area in the area covered by the post-burn IR image based on the difference image.

6. The method according to claim 5, wherein determining the burnt area in the area covered by the post-burn IR image comprises applying a morphological snakes algorithm.

7. The method according to claim 6, wherein a starting point for the morphological snakes algorithm is chosen inside the hotspot area.

8. The method according to any one of claims 5 to 7, further comprising rejecting false positives among detected burnt areas based on one or more of:
an overlap with previously detected burnt areas;
a comparison of pixel values in the difference image to a threshold; and/or
a landcover class of the burnt area.

9. The method according to any one of claims 5 to 8, further comprising determining a measure of confidence for a detected burnt area based on one or more of:
a spectral separability for the detected burnt area determined based on the pre-burn IR image and the post-burn IR image;
a number of hotspot areas other than the hotspot area to which the measure of the burnt area relates within the detected burnt area; and/or
a spatial relationship of the detected burnt area to the hotspot area to which the measure of the burnt area relates.

10. The method according to any one of the preceding claims, further comprising:
determining a plurality of areas on earth surface with high thermal emission in the one or more first IR images; and
applying a clustering algorithm to the plurality of areas with high thermal emission to determine the hotspot area.

11. The method according to any one of the preceding claims, further comprising:
determining an area of interest that includes and extends beyond the hotspot area by a predefined measure,
wherein the area covered by the one or more second IR images and the area covered by the one or more third IR images each include the area of interest; and
wherein the morphological snakes algorithm is applied to the area of interest.

12. The method according to claim 11 when depending on claim 5, further comprising:
extending a boundary of the area of interest if at least part of the boundary of the area of interest is included in the burnt area.

13. The method according to any one of the preceding claims, further comprising:
continuously obtaining the first image data for continuously determining hotspot areas on the earth surface.

14. The method according to any one of the preceding claims, further comprising:
storing the one or more second IR images as third IR images after determining the measure of a burnt area relating to the hotspot area in the one or more first IR images.

15. The method according to any one of the previous claims, further comprising:
maintaining a database for storing the third IR images.

16. An apparatus comprising a processor and a memory that is coupled to the processor and stores instructions for execution by the processor, wherein the processor is adapted to perform the method according to any one of the preceding claims.

17. A program including instructions that, when the program is carried out by a computing device, cause the computing device to perform the method according to any one of claims 1 to 15.

18. A computer-readable storage medium storing the program according to claim 17.
